(19) Europäisches Patentamt

European Patent Office

Office européen des brevets

(11) **EP 1 327 243 B1**

(12) **EUROPÄISCHE PATENTSCHRIFT**

(45) Veröffentlichungstag und Bekanntmachung des Hinweises auf die Patenterteilung:
**11.02.2004 Patentblatt 2004/07**

(21) Anmeldenummer: **02702266.4**

(22) Anmeldetag: **14.01.2002**

(51) Int Cl.[7]: **G10L 19/14**, H04L 29/06, H04L 29/08

(86) Internationale Anmeldenummer:
**PCT/EP2002/000297**

(87) Internationale Veröffentlichungsnummer:
**WO 2002/058054 (25.07.2002 Gazette 2002/30)**

(54) **VERFAHREN UND VORRICHTUNG ZUM ERZEUGEN EINES SKALIERBAREN DATENSTROMS UND VERFAHREN UND VORRICHTUNG ZUM DECODIEREN EINES SKALIERBAREN DATENSTROMS**

METHOD AND DEVICE FOR THE GENERATION OF A SCALABLE DATA STREAM AND METHOD AND DEVICE FOR DECODING A SCALABLE DATA STREAM

PROCEDE ET DISPOSITIF POUR PRODUIRE UN FLUX DE DONNEES MODULABLE ET PROCEDE ET DISPOSITIF POUR DECODER UN FLUX DE DONNEES MODULABLE

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **18.01.2001 DE 10102155**

(43) Veröffentlichungstag der Anmeldung:
**16.07.2003 Patentblatt 2003/29**

(73) Patentinhaber: **Fraunhofer-Gesellschaft zur Förderung der angewandten Forschung e.V. 80686 München (DE)**

(72) Erfinder:
 • **SPERSCHNEIDER, Ralph**
 **91056 Erlangen (DE)**
 • **TEICHMANN, Bodo**
 **90762 Fürth (DE)**
 • **LUTZKY, Manfred**
 **90427 Nürnberg (DE)**
 • **Grill, Bernhard**
 **91207 Lauf (DE)**

(74) Vertreter: **Schoppe, Fritz, Dipl.-Ing. et al Patentanwälte Schoppe, Zimmermann, Stöckeler & Zinkler, Postfach 246 82043 Pullach bei München (DE)**

(56) Entgegenhaltungen:
**EP-A- 0 918 401**

 • **BRANDENBURG K ET AL: "MPEG-4 NATURAL AUDIO CODING" SIGNAL PROCESSING. IMAGE COMMUNICATION, ELSEVIER SCIENCE PUBLISHERS, AMSTERDAM, NL, Bd. 15, Januar 2000 (2000-01), Seiten 423-444, XP000885372 ISSN: 0923-5965**

**Beschreibung**

Die vorliegende Erfindung bezieht sich auf skalierbare Codierer und Decodierer und insbesondere auf das Erzeugen von skalierbaren Datenströmen, durch die eine verzögerungsarme Decodierung einer unteren Skalierungsschicht gewährleistet ist.

Skalierbare Codierer sind in der EP 0 846 375 B1 gezeigt. Allgemein versteht man unter der Skalierbarkeit die Möglichkeit, einen Teilsatz eines Bitstroms, der ein codiertes Datensignal, wie z.B. ein Audiosignal oder ein videosignal, darstellt, in ein nutzbares Signal zu decodieren. Diese Eigenschaft ist insbesondere dann gewünscht, wenn z.B. ein Datenübertragungskanal nicht die nötige vollständige Bandbreite zur Übertragung eines vollständigen Bitstroms zur Verfügung stellt. Andererseits ist eine unvollständige Decodierung auf einem Decodierer mit niedrigerer Komplexität möglich. Allgemein werden in der Praxis verschiedene diskrete Skalierbarkeitsschichten definiert.

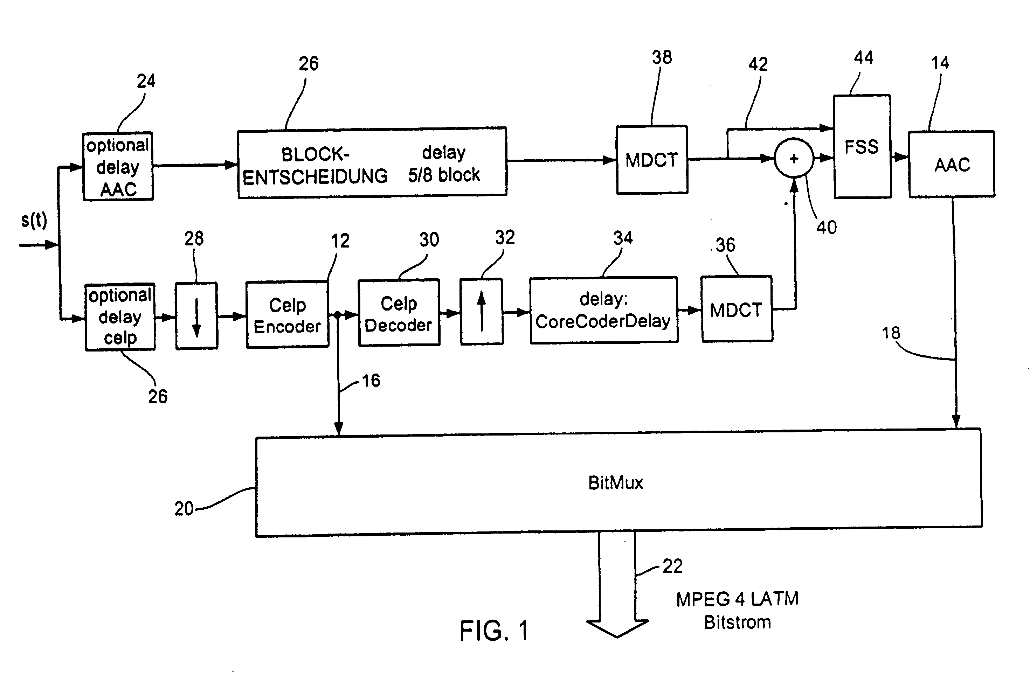

Ein Beispiel für einen skalierbaren Codierer, wie er im Subpart 4 (General Audio) des Parts 3 (Audio) des MPEG-4 Standards (ISO/IEC 14496-3:1999 Subpart 4) definiert ist, ist in Fig. 1 gezeigt. Ein zu codierendes Audiosignal s(t) wird eingangsseitig in den skalierbaren Codierer eingespeist. Der in Fig. 1 gezeigte skalierbare Codierer enthält einen ersten Codierer 12, der ein MPEG-Celp-Codierer ist. Der zweite Codierer 14 ist ein AAC-Codierer, der eine hochqualitative Audiocodierung liefert und im Standard MPEG-2 AAC (ISO/IEC 13818) definiert ist. Der Celp-Codierer 12 liefert über eine Ausgangsleitung 16 eine erste Skalierungsschicht, während der AAC-Codierer 14 über eine zweite Ausgangsleitung 18 eine zweite Skalierungsschicht zu einem Bitstrom-Multiplexer (BitMux) 20 liefert. Ausgangsseitig gibt der Bitstrom-Multiplexer dann einen MPEG-4-LATM-Bitstrom 22 aus (LATM = Low-Overhead MPEG-4 Audio Transport Mul tiplex). Das LATM-Format ist im Abschnitt 6.5 des Parts 3 (Audio) der ersten Ergänzung zum MPEG-4 Standard (ISO/IEC 14496-3: 1999/AMD1:2000) beschrieben.

Der skalierbare Audiocodierer umfaßt ferner einige weitere Elemente. Zunächst existiert eine Verzögerungsstufe 24 im AAC-Zweig und eine Verzögerungsstufe 26 im Celp-Zweig. Durch beide Verzögerungsstufen kann eine optionale Verzögerung für den jeweiligen Zweig eingestellt werden. Der Verzögerungsstufe 26 des Celp-Zweigs ist eine Downsampling-Stufe 28 nachgeschaltet, um die Abtastrate des Eingangssignals s(t) an die von dem Celp-Codierer geforderte Abtastrate anzupassen. Dem Celp-Codierer 12 nachgeschaltet ist ein inverser Celp-Decodierer 30, wobei das Celp-codierte/decodierte Signal einer Upsampling-Stufe 32 zugeführt wird. Das upgesampelte Signal wird dann einer weiteren Verzögerungsstufe 34, die im MPEG-4-Standard mit "Core Coder Delay" bezeichnet ist, zugeführt.

Die Stufe CorecoderDelay 34 hat folgende Funktion. Ist die Verzögerung auf Null eingestellt, so verarbeiten der erste Codierer 14 und der zweite Codierer 16 in einem sogenannten Superframe exakt dieselben Abtastwerte des Audioeingangssignals. Ein Superframe kann beispielsweise aus drei AAC-Frames bestehen, die zusammen eine gewisse Anzahl von Abtastwerten Nr. x bis Nr. y des Audiosignals darstellen. Der Superframe umfaßt ferner z. B. 8 CELP-Blöcke, die im Falle von CoreCoderDelay = 0 dieselbe Anzahl von Abtastwerten und auch dieselben Abtastwerte Nr. x bis Nr. y darstellen.

Ist dagegen ein CoreCoderDelay D als Zeitgröße ungleich Null eingestellt, so stellen die drei Blöcke von AAC Frames dennoch die gleichen Abtastwerte Nr. x bis Nr. y dar. Die acht Blöcke von CELP-Frames stellen dagegen Abtastwerte Nr. x - Fs D bis Nr. y - Fs D dar, wobei Fs die Abtastfrequenz des Eingangssignals ist.

Die aktuellen Zeitabschnitte des Eingangssignals in einem Superframe für die AAC-Blöcke und die CELP-Blöcke können somit entweder identisch sein, wenn CoreCoderDelay D = 0 ist, oder aber im Falle von D ungleich Null um CoreCoderDelay zueinander verschoben sein. Für die nachfolgenden Ausführungen wird jedoch aus Einfachheitsgründen ohne Einschränkung der Allgemeinheit ein CoreCoderDelay = 0 angenommen, so daß der aktuelle Zeitabschnitt des Eingangssignals für den ersten Coder und der aktuelle Zeitabschnitt für den zweiten Coder identisch sind. Allgemein besteht für einen Superframe jedoch lediglich die Anforderung, daß der/die AAC-Block/Blöcke und der/die CELP-Blöcke in einem Superframe dieselbe Anzahl von Abtastwerten darstellen, wobei die Abtastwerte an sich nicht unbedingt die identischen sein müssen, sondern auch um CoreCoderDelay zueinander verschoben sein können.

Es sei angemerkt, daß der Celp-Codierer einen Abschnitt des Eingangssignals s(t) je nach Konfiguration schneller verarbeitet als der AAC-Codierer 14. In dem AAC-Zweig ist der Optionalverzögerungsstufe 24 eine Blockentscheidungsstufe 26 nachgeschaltet, die u. a. feststellt, ob zum Fenstern des Eingangssignals s(t) kurze oder lange Fenster zu verwenden sind, wobei für stark transiente Signale kurze Fenster zu wählen sind, während für weniger transiente Signale lange Fenster vorgezogen werden, da bei ihnen das Verhältnis zwischen Nutzdatenmenge und Seiteninformationen besser als bei kurzen Fenstern ist.

Durch die Blockentscheidungsstufe 26 wird im vorliegenden Beispiel eine feste Verzögerung um z. B. das 5/8-fache eines Blocks durchführt. Dies wird in der Technik als Look-Ahead-Funktion bezeichnet. Die Blockentscheidungsstufe muß bereits um eine gewisse Zeit vorausschauen, um überhaupt feststellen zu können, ob in der Zukunft transiente Signale sind, die mit kurzen Fenstern codiert werden müssen. Hierauf wird sowohl das entsprechende Signal im Celp-Zweig als auch das Signal im AAC-Zweig einer Einrichtung zum Umsetzen der zeitlichen Darstellung in eine spektrale Darstellung zugeführt, welche in Fig. 1 mit MDCT 36 bzw. 38 bezeichnet ist (MDCT = Modified Cosine Transform = Modifizierte Diskrete Cosinus-Transformation). Die Ausgangssignale der MDCT-Blöcke 36, 38 werden dann einem Subtrahierer 40 zugeführt.

An dieser Stelle müssen zeitlich zusammengehörige Abtastwerte vorliegen, d. h. das Delay muß in beiden Zweigen identisch sein.

Der darauffolgende Block 44 stellt fest, ob es günstiger ist, das Eingangssignal an sich dem AAC-Codierer 14 zuzuführen. Dies wird über den Umgehungszweig 42 ermöglicht. Wenn jedoch festgestellt wird, daß das Differenzsignal am Ausgang des Subtrahierers 40 z.B. energiemäßig kleiner ist als das von dem MDCT-Block 38 ausgegebene Signal, so wird nicht das ursprüngliche Signal, sondern das Differenzsignal genommen, um durch den AAC-Codierer 14 codiert zu werden, um schließlich die zweite Skalierungsschicht 18 zu bilden. Dieser Vergleich kann bandweise durchgeführt werden, was durch eine frequenzselektive Schalteinrichtung (FSS) 44 angedeutet ist. Die näheren Funktionen der einzelnen Elemente sind in der Technik bekannt und beispielsweise im MPEG-4-Standard sowie in weiteren MPEG-Standards beschrieben.

Ein wesentliches Merkmal beim MPEG-4-Standard bzw. auch bei anderen Codierer-Standards ist, daß die Übertragung des komprimierten Datensignals über einen Kanal mit konstanter Bitrate erfolgen soll. Alle High-Quality-Audiocodecs arbeiten blockbasiert, d.h. sie verarbeiten Blöcke von Audiodaten (Größenordnung 480-1024 Samples) zu Stücken eines komprimierten Bitstroms, welche auch als Frames bezeichnet werden. Das Bitstromformat muß dabei so aufgebaut sein, daß ein Decodierer ohne A-Priori-Informationen, wo ein Frame beginnt, in der Lage ist, den Anfang eines Frames zu erkennen um mit einer möglichst geringen Verzögerung die Ausgabe der decodierten Audiosignaldaten zu beginnen. Daher beginnt jeder Header oder Bestimmungsdatenblock eines Frames mit einem bestimmten Synchronisationswort, nach dem in einem kontinuierlichen Bitstrom gesucht werden kann. Weitere übliche Bestandteile im Datenstrom neben dem Bestimmungsdatenblock sind die Hauptdaten oder "Payload Data" der einzelnen Layer, in denen die eigentlichen komprimierten Audiodaten enthalten sind.

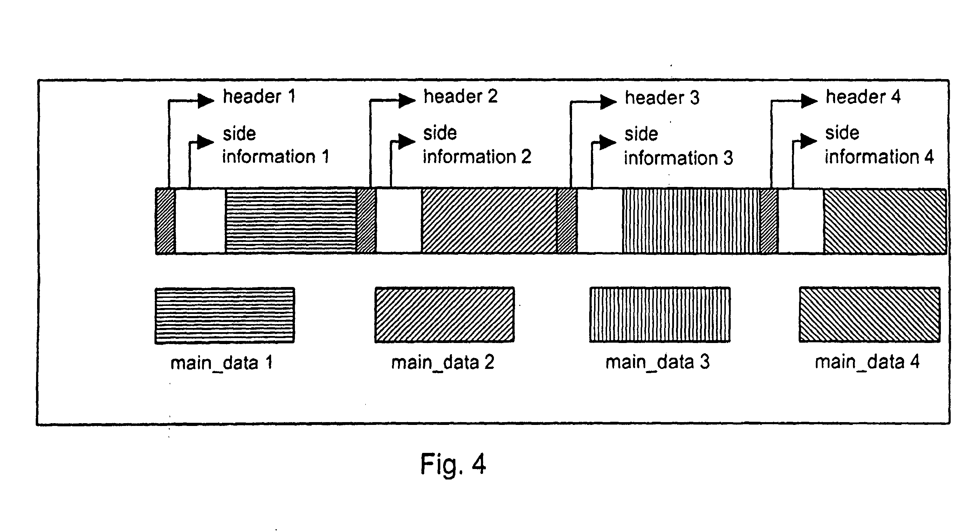

Fig. 4 zeigt ein Bitstromformat mit fester Framelänge. In diesem Bitstromformat werden die Header oder Bestimmungsdatenblöcke äquidistant in den Bitstrom eingefügt. Die zu diesem Header zugehörigen Seiteninformationen ("Side Information") und Hauptdaten (Main Data) folgen unmittelbar dahinter. Die Länge, d.h. Bitanzahl, für die Hauptdaten ist in jedem Frame gleich. Ein solches Bitstromformat, wie es in Fig. 4 gezeigt wird, wird beispielsweise bei MPEG-Layer 2 oder MPEG-CELP verwendet.

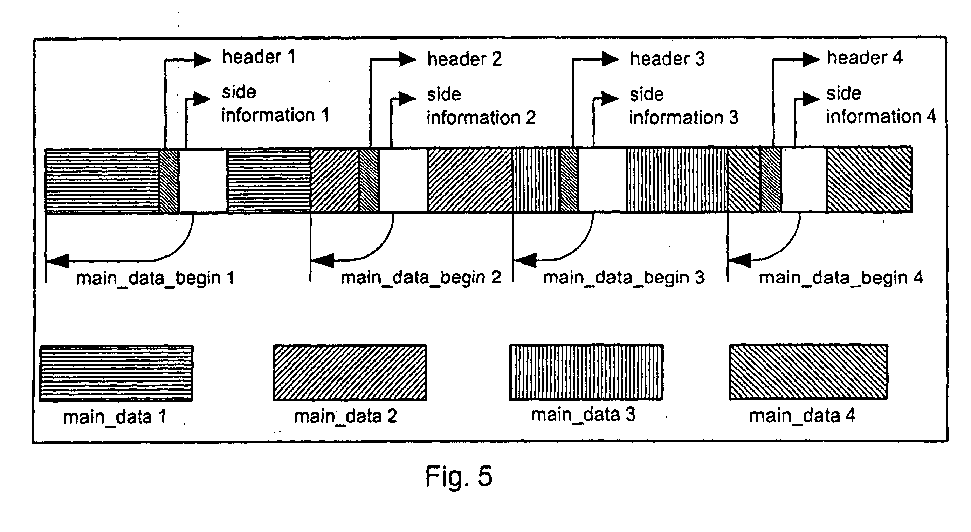

Fig. 5 zeigt ein anderes Bitstromformat mit einer festen Framelänge und einem Backpointer oder Rückwärtszeiger. Bei diesem Bitstromformat sind der Header und die Seiteninformationen wie bei dem Format, das in Fig. 4 gezeigt ist, äquidistant angeordnet. Der Beginn der zugehörigen Hauptdaten erfolgt allerdings nur im Ausnahmefall unmittelbar im Anschluß an einen Header. In den meisten Fällen ist der Beginn in einem der vorherigen Frames. Die Anzahl an Bits, um die der Beginn der Hauptdaten im Bitstrom verschoben ist, wird durch die Seiteninformations-Variable Backpointer übertragen. Das Ende dieser Hauptdaten kann in diesem Frame liegen oder in einem vorherigen Frame. Die Länge der Hauptdaten ist damit nicht mehr konstant. Somit kann die Anzahl der Bits, mit denen ein Block codiert wird, an die Eigenschaften des Signals angepaßt werden. Gleichzeitig kann jedoch eine konstante Bitrate erreicht werden. Diese Technik wird "Bitsparkasse" genannt und vergrößert das theoretische Delay in der Übertragungskette. Ein solches Bitstromformat wird beispielsweise bei MPEG Layer 3 (MP3) eingesetzt. Die Technik der Bitsparkasse ist ebenfalls in dem Standard MPEG Layer 3 beschrieben.

Allgemein gesagt stellt die Bitsparkasse einen Buffer von Bits dar, die eingesetzt werden können, um zum Codieren eines Blocks von zeitlichen Abtastwerten mehr Bits zur Verfügung zu stellen, als eigentlich durch die konstante Ausgangsdatenrate erlaubt sind. Die Technik der Bitsparkasse trägt der Tatsache Rechnung, daß manche Blöcke von Audioabtastwerten mit weniger Bits als durch die konstante Übertragungsrate vorgegeben codiert werden können, so daß sich durch diese Blöcke die Bitsparkasse füllt, während wieder andere Blöcke von Audioabtastwerten psychoakustische Eigenschaften haben, die keine so große Kompression erlauben, so daß für diese Blöcke zum störungsarmen bzw. störungsfreien Codieren die zur Verfügung stehenden Bits eigentlich nicht ausreichen würden. Die benötigten überzähligen Bits werden aus der Bitsparkasse genommen, so daß sich die Bitsparkasse bei solchen Blöcken leert.

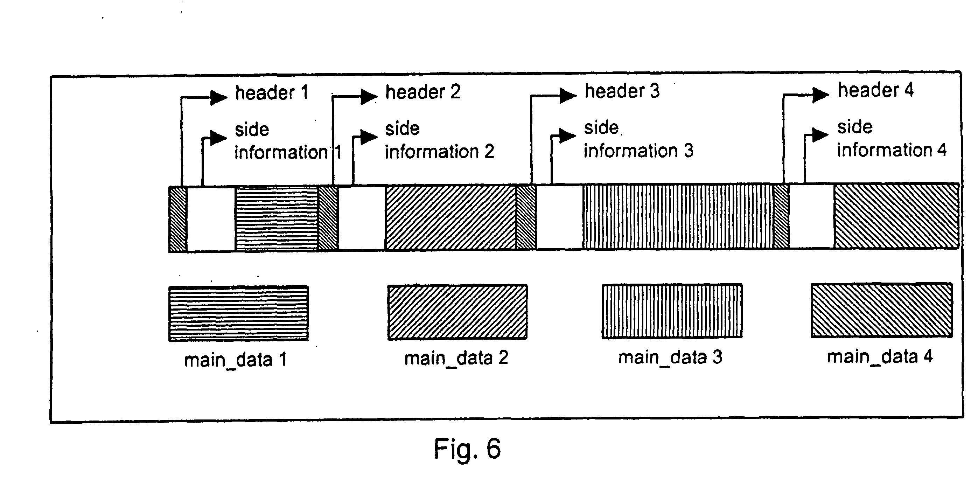

Ein solches Audiosignal könnte jedoch auch, wie es in Fig. 6 gezeigt ist, durch ein Format mit variabler Framelänge übertragen werden. Bei dem Bitstromformat "Variable Framelänge", wie es in Fig. 6 dargestellt ist, wird die feste Reihenfolge der Bitstromelemente Header, Seiteninformationen und Hauptdaten wie bei der "Festen Framelänge" eingehalten. Da die Länge der Hauptdaten nicht konstant ist, kann auch hier die Bitsparkassentechnik eingesetzt werden, es werden jedoch keine Backpointer wie in Fig. 5 benötigt. Ein Beispiel für ein Bitstromformat, wie es in Fig. 6 dargestellt ist, ist das Transportformat ADTS (Audio Data Transport Stream), wie es im Standard MPEG 2 AAC definiert ist.

Es sei darauf hingewiesen, daß die vorher genannten Codierer alle keine skalierbaren Codierer sind, sondern lediglich einen einzigen Audiocodierer umfassen.

In MPEG 4 ist die Kombination verschiedener Codierer/Decodierer zu einem skalierbaren Codierer/Decodierer vorgesehen. So ist es möglich und sinnvoll, einen Celp-Sprachcodierer als ersten Codierer mit einem AAC-Codierer für die weitere bzw. die weiteren Skalierungsschichten zu kombinieren und in einem Bitstrom zu verpacken. Der Sinn dieser Kombination besteht darin, daß die Möglichkeit offen steht, entweder alle Skalierungsschichten oder Layer zu decodieren und damit eine bestmögliche Audioqualität zu erreichen, oder auch Teile davon, unter Umständen auch nur die erste Skalierungsschicht mit der entsprechenden eingeschränkten Audioqualität. Gründe für die alleinige Decodierung der untersten Skalierungsschicht können sein, daß wegen zu kleiner Bandbreite des Übertragungskanals der Decodierer nur die erste Skalierungsschicht des Bitstroms erhalten hat. Deswegen werden bei der Übertragung die Anteile der ersten Skalierungsschicht im Bitstrom gegenüber der zweiten und den weiteren Skalierungsschichten bevorrechtigt, wodurch bei Kapazitätsengpässen im Übertragungsnetz die Übertragung der ersten Skalierungsschicht sichergestellt wird, während die zweite Skalierungsschicht eventuell ganz oder teilweise verloren geht.

Ein weiterer Grund kann darin liegen, daß ein Decodierer ein möglichst geringes Codec-Delay erreichen möchte und deswegen nur die erste Skalierungsschicht decodiert. Es sei darauf hingewiesen, daß das Codec-Delay eine Celp-Codecs im allgemeinen signifikant kleiner als das Delay des AAC-Codecs ist.

In MPEG 4 Version 2 ist das Transportformat LATM standardisiert, welches unter anderem auch skalierbare Datenströme übertragen kann.

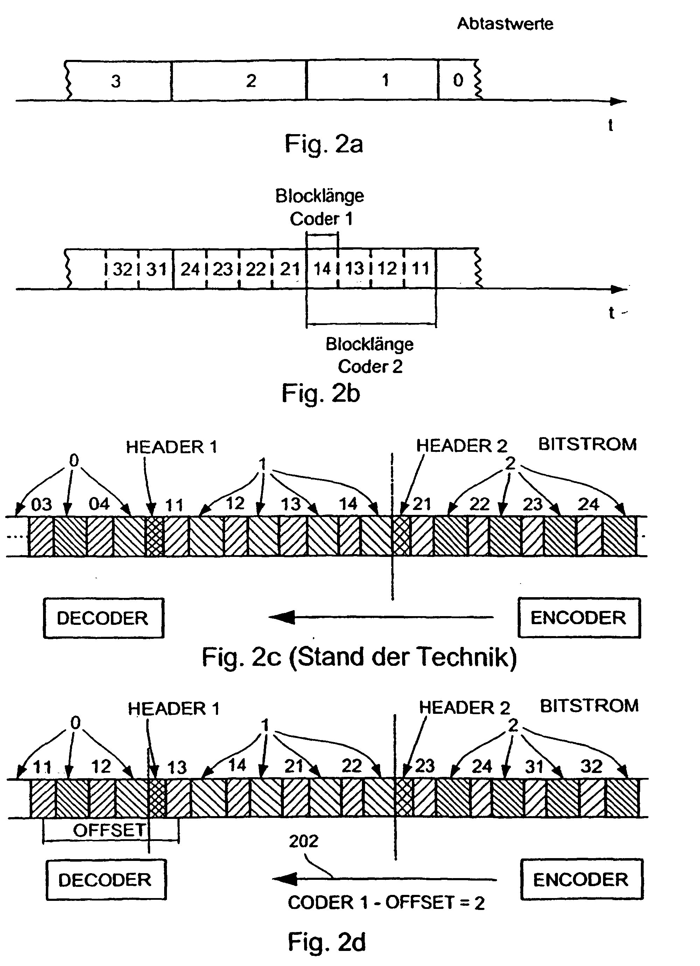

Im nachfolgenden wird auf Fig. 2a Bezug genommen. Fig. 2a ist eine schematische Darstellung der Abtastwerte des Eingangssignals s(t). Das Eingangssignal kann in verschiedene aufeinanderfolgende Abschnitte 0, 1, 2, 3 eingeteilt werden, wobei jeder Abschnitt eine bestimmte feste Anzahl von zeitlichen Abtastwerten hat. Üblicherweise verarbeitet der AAC-Codierer 14 (Fig. 1) einen gesamten Abschnitt 0, 1, 2 oder 3, um für diesen Abschnitt ein codiertes Datensignal zu liefern. Der Celp-Codierer 12 (Fig. 1) verarbeitet jedoch üblicherweise eine geringere Menge an zeitlichen Abtastwerten pro Codierungsschritt. So ist in Fig. 2b beispielhaft gezeigt, daß der Celp-Codierer bzw. allgemein gesagt der erste Codierer oder Coder 1 eine Blocklänge hat, die ein Viertel der Blocklänge des zweiten Codierers beträgt. Es sei darauf hingewiesen, daß diese Aufteilung völlig willkürlich ist. Die Blocklänge des ersten Codierers könnte auch halb so groß sein, könnte jedoch auch ein Elftel der Blocklänge des zweiten Codierers betragen. Somit wird der erste Codierer aus dem Abschnitt des Eingangssignals vier Blöcke erzeugen (11, 12, 13, 14), aus denen der zweite Codierer einen Block von Daten liefert. In Fig. 2c ist ein übliches LATM-Bitstromformat gezeigt.

Ein Superframe kann verschiedene Verhältnisse von Anzahl von AAC-Frames zu Anzahl von CELP-Frames haben, wie es in MPEG 4 tabellarisch dargelegt ist. So kann ein Superframe z. B. einen AAC Block und 1 bis 12 CELP-Blöcke, 3 AAC-Blöcke und 8 CELP-Blöcke aber auch z. B. mehr AAC-Blöcke als CELP-Blöcke je nach Konfiguration aufweisen. Ein LATM-Frame, der einen LATM-Bestimmungsdatenblock hat, umfaßt einen Superframe oder auch mehrere Superframes.

Es wird beispielhaft die Erzeugung des durch den Header 1 eröffneten LATM-Frames beschrieben. Zunächst werden die Ausgangsdatenblöcke 11, 12, 13, 14 des Celp-Codierers 12 (Fig. 1) erzeugt und zwischengespeichert. Parallel dazu wird der Ausgangsdatenblock des AAC-Codierers, der in Fig. 2c mit "1" bezeichnet ist, erzeugt. Dann, wenn der Ausgangsdatenblock des AAC-Codierers erzeugt ist, wird erst der Bestimmungsdatenblock (Header 1) geschrieben. Je nach Konvention kann dann unmittelbar hinter den Header 1 der als erstes erzeugte Ausgangsdatenblock des ersten Codierers, der in Fig. 2c mit 11 bezeichnet ist, geschrieben, d. h. übertragen, werden. Es wird üblicherweise (in Anbetracht geringer erforderlicher Signalisierungsinformationen) zum weiteren Schreiben bzw. Übertragen des Bitstroms ein äquidistanter Abstand der Ausgangsdatenblöcke des ersten Codierers gewählt, wie es in Fig. 2c dargestellt ist. Dies bedeutet, daß nach dem Schreiben bzw. Übertragen des Blocks 11 der zweite Ausgangsdatenblock 12 des ersten Codierers, dann der dritte Ausgangsdatenblock 13 des ersten Codierers und dann der vierte Ausgangsdatenblock 14 des ersten Codierers in äquidistanten Abständen geschrieben bzw. übertragen werden. Der Ausgangsdatenblock 1 des zweiten Codierers wird während der Übertragung in die verbleibenden Lücken eingefüllt. Dann ist ein LATM-Frame fertig geschrieben, d. h. fertig übertragen.

Nachteilig an diesem Konzept ist, daß mit einer Übertragung des Datenstroms vom Codierer zum Decodierer frühestens dann begonnen werden kann, wenn alle Daten, die in dem Header enthalten sein müssen, zur Verfügung stehen. Daher kann der LATM-Header 1 erst geschrieben, d. h. übertragen, werden, wenn der zweite Codierer (AAC-Codierer 14 in Fig. 1) mit seiner Codierung des aktuellen Abschnitts fertig ist, da der LATM-Header u. a. Längeninformationen über die Blöcke im Superframe umfaßt. Daher müssen im Codierer der Ausgangsdatenblock 11, der Ausgangsdatenblock 12, der Ausgangsdatenblock 13 und der Ausgangsdatenblock 14 des ersten Codierers eine gewisse Zeit zwischengespeichert werden, bis der üblicherweise langsamere, da mit höherer Framelänge arbeitende zweite Codierer 14 die Ausgangsdaten erzeugt hat. Selbst wenn somit ein Decodierer lediglich die Decodierung der ersten Skalierungsschicht, also der Blöcke 11, 12, 13, 14 wünscht, muß er dennoch warten, bis der zweite Codierer den gegenwärtig betrachteten Abschnitt oder Block des Eingangssignals fertig verarbeitet hat, obgleich der Decodierer an der zweiten Skalierungsschicht überhaupt nicht interessiert ist. Dies ist der Fall, da der Encoder die Blöcke des 1. Codierers verzögert in den Bitstrom schreibt.

Dieses Merkmal ist besonders im Echtzeitbetrieb störend. Wenn beispielsweise ein Telefonat zwischen zwei Personen betrachtet wird, so liefert ein Celp-Sprachcodierer eine relativ schnelle verzögerungsarme Codierung. Wenn senderund empfängerseitig ausschließlich ein Celp-Sprachcodierer vorgesehen ist, so ist eine Sprachkommunikation ohne unerwünschte Verzögerungen durchaus möglich. Wenn jedoch im Sender und im Empfänger ein skalierbarer Codierer gemäß Fig. 1 vorgesehen sind, um z.B. Sprache und Musik hochqualitativ übertragen zu können, so wird das in Fig. 2c gezeigte Bitstromformat zu unerwünscht langen Verzögerungen führen, die eine Echtzeit-Hin-und-Her-Kommunikation nahezu unmöglich bzw. so störend machen, daß ein solches Produkt auf dem Markt keine Chance hätte.

Die Aufgabe der vorliegenden Erfindung besteht darin, ein Verfahren und eine Vorrichtung zum Erzeugen eines skalierbaren Datenstroms zu schaffen, durch den eine verzögerungsarme Decodierung der ersten Skalierungsschicht möglich ist.

Diese Aufgabe wird durch ein Verfahren nach Patentanspruch 1 und durch eine Vorrichtung nach Patentanspruch 9 gelöst.

Eine weitere Aufgabe der vorliegenden Erfindung besteht darin, ein Verfahren und eine Vorrichtung zum verzögerungsarmen Decodieren eines skalierbaren Datenstroms zu schaffen.

Diese Aufgabe wird durch ein Verfahren nach Patentanspruch 8 und durch eine Vorrichtung nach Patentanspruch 10 gelöst.

Der vorliegenden Erfindung liegt die Erkenntnis zu Grunde, daß mit der Konvention gebrochen werden muß, daß ein Frame des Daten- oder Bitstroms, der durch einen Bestimmungsdatenblock eingeleitet wird, sowohl die Ausgangsdatenblöcke des ersten Codierers für einen aktuellen Zeitabschnitt als auch den Ausgangsdatenblock des zweiten Codierers für den aktuellen Zeitabschnitt des Eingangssignals umfaßt.

Statt dessen wird gemäß der vorliegenden Erfindung zumindest ein Ausgangsdatenblock des ersten Codierers in einem früheren, d.h. vorhergehenden, Frame geschrieben, so daß ein Frame, der durch einen Bestimmungsdatenblock eingeleitet wird, zumindest einen Ausgangsdatenblock des ersten Codierers für einen späteren Zeitabschnitt der Eingangsdaten aufweist. Bei skalierbaren Codierern mit einem ersten Codierer, der mehr Ausgangsdatenblöcke für einen Zeitabschnitt des Eingangssignals liefert, als der zweite Codierer liefert, wird der erste Codierer unabhängig davon, ob er etwas schneller oder etwas langsamer als der zweite Codierer arbeitet, immer früher fertig sein, da er in dem Fall von zwei Ausgangsdatenblöcken des ersten Codierers für einen Ausgangsdatenblock des zweiten Codierers nur die Hälfte der zeitlichen Abtastwerte verarbeiten muß.

Um eine verzögerungsarme Übertragung für den Fall zu ermöglichen, daß nur die unterste erste Skalierungsschicht für den Decodierer von Interesse ist, wird der Decodierer dann den entsprechenden Ausgangsdatenblock des ersten Codierers früher als beim Stand der Technik erhalten. Damit der Decodierer jedoch für den Fall, daß er beide Skalierungsschichten, und unter Umständen noch mehr als zwei Skalierungsschichten, zusammen decodieren möchte, um ein hochqualitatives Audiosignal zu erzeugen, wird beispielsweise in den Bestimmungsdatenblock oder allgemein in den skalierbaren Datenstrom irgendwo eine Offset-Information eingetragen, damit der Decodierer eindeutig und zweifelsfrei feststellen kann, welche Ausgangsdatenblöcke des ersten Codierers zu welchen Ausgangsdatenblöcken des zweiten Codierers gehören, d.h. sich auf den gleichen Zeitabschnitt des ursprünglichen Eingangssignals beziehen.

Falls ein Superframe, der aus einem Bestimmungsdatenblock und Datenblöcken des ersten Codierers und Datenblöcken des zweiten Codierers aufgebaut ist, z: B. zwei Blöcke des ersten Codierers und drei Blöcke des zweiten Codierers aufweist, so wird erfindungsgemäß bereits ein Delayvorteil für den ersten Codierer erreicht, wenn der erste Block des ersten Codierers vor dem Schreiben des LATM-Headers übertragen bzw. geschrieben wird. Auch bei Verhältnissen der Anzahl von Ausgangsdatenblöcken des zweiten Codierers zu der Anzahl von Ausgangsdatenblöcken des ersten Codierers größer als Eins wird somit bereits ein erfindungsgemäßer Vorteil erreicht, so lange ein Superframe mehr als einen Block, also zumindest zwei Blöcke, von Ausgangsdaten des ersten Codierers aufweist.

Bei dem bevorzugten Ausführungsbeispiel der vorliegenden Erfindung wird der Bitstrom derart geschrieben, daß die Ausgangsdatenblöcke des ersten Codierers unmmittelbar dann, wenn sie vom Codierer ausgegeben werden, in den Bitstrom geschrieben werden und sofort im Echtzeitbetrieb übertragen werden, unabhängig davon, wie lang der zweite Codierer noch braucht. Damit wird sichergestellt, daß die Verzögerung bei der Übertragung der ersten Skalierungsschicht minimal ist und eigentlich nur durch die innere Codiererverzögerung des ersten Codierers im skalierbaren Coder und die innere Decodiererverzögerung des ersten Decodierers im skalierbaren Decoder bestimmt ist. Möchte der skalierbare Decodierer jedoch eine Decodierung des entsprechenden Zeitabschnitts der Eingangsdaten mit voller Audioqualität, also mit allen Skalierungsschichten, durchführen, so muß er die Ausgangsdatenblöcke des ersten Codierers im empfangenen Datenstrom so lange zwischenspeichern, bis im skalierbaren Datenstrom die Offset-Informationen ankommen, damit der skalierbare Decodierer feststellen kann, wie viele Ausgangsdatenblöcke des ersten Codierers in einem Frame sind, die in diesem Frame eigentlich gar nicht gehören, sondern die in den nächsten Frame gehören, um die korrekten Ausgangsdatenblöcke des ersten Codierers einem Ausgangsdatenblock des zweiten Codierers zuordnen zu können.

Gemäß einem weiteren bevorzugten Ausführungsbeispiel der vorliegenden Erfindung haben die Ausgangsdatenblöcke des ersten Codierers eine konstante Länge und werden äquidistant in den Bitstrom geschrieben, so daß dadurch zwei Dinge erreicht werden. Erstens müssen Position und Länge der Ausgangsdatenblöcke des ersten Codierers nicht extra signalisiert werden, sondern können im Decodierer voreingestellt werden. Zweitens ist ein Schreiben der Ausgangsdatenblöcke des ersten Codierers ohne Verzögerung in den Bitstrom möglich, wenn die Verarbeitungsdauer zum Codieren von Abtastwerten unabhängig von den Signaleigenschaften immer gleich groß ist, wie es beispielsweise bei einem Celp-Sprachcodierer, der auf Zeitbereichsbasis arbeitet, der Fall ist. Der Ausgangsdatenblock des zweiten Codierers wird dann einfach in die Zwischenräume eingefügt. Es sei darauf hingewiesen, daß zum vollständigen Schreiben des Bitstroms gemäß der vorliegenden Erfindung immer Ausgangsdaten des zweiten Codierers vorhanden sind, da ja Ausgangsdatenblöcke des ersten Codierers in einen Frame geschrieben werden, der eigentlich für den vorausgehenden Zeitabschnitt vorgesehen ist, den der zweite Codierer bereits fertig codiert hat, und dessen Daten in einem Zwischenspeicher liegen, um zwischen die Ausgangsdatenblöcke des ersten Codierers für den aktuellen Zeitabschnitt des skalierbaren Datenstroms eingetragen zu werden.

Der erfindungsgemäße skalierbare Datenstrom ist besonders für Echtzeitanwendungen von Nutzen, kann jedoch genauso auch für Nicht-Echtzeitanwendungen eingesetzt werden.

Ein weiterer Vorteil der vorliegenden Erfindung besteht darin, daß das erfindungsgemäße Konzept zum Erzeugen eines skalierbaren Datenstroms mit dem durch MPEG-4 vorgegebenen LATM-Format kompatibel ist, wobei lediglich als zusätzliche Seiteninformation die Offset-Informationen beispielsweise innerhalb des LATM-Headers übertragen werden. Zur Signalisierung des Offsets werden sehr wenig Bits benötigt. Werden beispielsweise 5 Bits für die Offset-Informationen bereitgestellt, so kann ein Versatz von bis zu 31 Ausgangsdatenblöcken des ersten Codierers ohne großen Bitaufwand signalisiert werden.

Bevorzugte Ausführungsbeispiele der vorliegenden Erfindung werden nachfolgend bezugnehmend auf die beiliegenden Zeichnungen detailliert erläutert. Es zeigen:

Fig. 1  einen skalierbaren Codierer gemäß MPEG 4;

Fig. 2a  eine schematische Darstellung eines Eingangssignals, das in aufeinanderfolgende Zeitabschnitte eingeteilt ist;

Fig. 2b  eine schematische Darstellung eines Eingangssignals, das in aufeinanderfolgende Zeitabschnitte eingeteilt ist, wobei das Verhältnis der Blocklänge des ersten Codierers zu der Blocklänge des zweiten Codierers dargestellt ist;

Fig. 2c  eine schematische Darstellung eines skalierbaren Datenstroms mit hoher Verzögerung bei der Decodierung der ersten Skalierungsschicht;

Fig. 2d  eine schematische Darstellung eines erfindungsgemäßen skalierbaren Datenstroms mit niedriger Verzögerung bei der Decodierung der ersten Skalierungsschicht;

Fig. 3  eine detaillierte Darstellung des erfindungsgemäßen skalierbaren Datenstromes am Beispiel eines Celp-Codierers als erster Codierer und eines AAC-Codierers als zweiter Codierer mit und ohne Bitsparkassenfunktion.

Fig. 4  ein Beispiel für ein Bitstromformat mit fester Framelänge;

Fig. 5  ein Beispiel für ein Bitstromformat mit fester Framelänge und Back-Pointer; und

Fig. 6  ein Beispiel eines Bitstromformats mit variabler Framelänge.

Im nachfolgenden wird auf Fig. 2d im vergleich zu Fig. 2c eingegangen, um den erfindungsgemäßen Bitstrom zu erläutern. Genauso wie in Fig. 2c enthält der skalierbare Datenstrom aufeinanderfolgende Bestimmungsdatenblöcke, die als Header 1 und Header 2 bezeichnet sind. Beim bevorzugten Ausführungsbeispiel der vorliegenden Erfindung, das gemäß dem MPEG 4-Standard ausgeführt ist, sind die Bestimmungsdatenblöcke LATM-Header. Genauso wie im Stand der Technik findet sich in Übertragungsrichtung von einem Encoder zu einem Decodierer, die in Fig. 2d mit einem Pfeil 202 dargestellt ist, hinter dem LATM-Header 200 die von links oben nach rechts unten schraffierten Teile des Ausgangsdatenblocks des AAC-Codierers, die in verbleibende Lücken zwischen Ausgangsdatenblöcken des ersten Codierers eingetragen sind.

Im Unterschied zum Stand der Technik finden sich nun jedoch in dem durch den LATM-Header 200 begonnenen Frame nicht mehr nur Ausgangsdatenblöcke des ersten Codierers, die in diesen Frame gehören, wie z.B. die Ausgangsdatenblöcke 13 und 14, sondern auch die Ausgangsdatenblöcke 21 und 22 des nachfolgenden Abschnitts von Eingangsdaten. Anders ausgedrückt sind bei dem in Fig. 2d gezeigten Beispiel die beiden Ausgangsdatenblöcke des ersten Codierers, die mit 11 und 12 bezeichnet sind, in Übertragungsrichtung (Pfeil 202) vor dem LATM-Header 200 im Bitstrom vorhanden. Bei dem in Fig. 2d gezeigten Beispiel deuten die Offset-Informationen 204 auf einen Offset der Ausgangsdatenblöcke des ersten Codierers von zwei Ausgangsdatenblöcken hin. Wenn Fig. 2d mit Fig. 2c verglichen wird, so ist zu erkennen, daß der Decodierer bereits die unterste Skalierungsschicht genau um eine diesem Offset entsprechende Zeit früher decodieren kann als im Fall von Fig. 2c, wenn der Decodierer lediglich an der ersten Skalierungsschicht interessiert ist. Die Offset-Informationen, die z. B. in Form eines "Core Frame Offset " signalisiert werden können, dienen dazu, die Position des ersten Ausgangsdatenblocks 11 im Bitstrom zu bestimmen.

Für den Fall von Core Frame Offset = Null ergibt sich der in Fig. 2c bezeichnete Bitstrom. Ist jedoch Core Frame Offset > Null, so wird der entsprechende Ausgangsdatenblock des ersten Codierers 11 um die Anzahl Core Frame Offset an Ausgangsdatenblöcken des ersten Codierers früher übertragen. Anders ausgedrückt ergibt sich das Delay zwischen dem ersten Ausgangsdatenblock des ersten Codierers nach dem LATM-Header und dem ersten AAC-Frame aus Core Coder Delay (Fig. 1) + Core Frame Offset x Core-Blocklänge (Blocklänge des Coders 1 in Fig. 2b). Wie aus dem Vergleich von Fig. 2c und 2d deutlich wird, werden für Core Frame Offset = Null (Fig. 2c) nach dem LATM-Header 200 die Ausgangsdatenblöcke 11 und 12 des ersten Codierers übertragen. Durch die Übertragung von Core Frame Offset = 2 können die Ausgangsdatenblöcke 13 und 14 nach dem LATM-Header 200 folgen, wodurch die Verzögerung bei reiner Celp-Decodierung, also Decodierung der ersten Skalierungsschicht, um zwei Celp-Blocklängen verringert wird. Optimal wäre im Beispiel ein Offset von drei Blöcken. Ein Offset von einem oder zwei Blöcken bringt jedoch ebenfalls bereits einen Delayvorteil.

Durch diesen Bitstromaufbau ist es erfindungsgemäß möglich, daß der Celp-Codierer den erzeugten Celp-Block unmittelbar nach dem Codieren übertragen kann. In diesem Fall wird dem Celp-Codierer kein zusätzliches Delay durch den Bitstrommultiplexer (20) zugefügt. Somit wird für diesen Fall zu dem Celp-Delay kein zusätzliches Delay durch die skalierbare Kombination hinzugefügt, so daß das Delay minimal wird.

Es wird darauf hingewiesen, daß der in Fig. 2d gezeigte Fall lediglich beispielhaft ist. So sind verschiedene Verhältnisse der Blocklänge des ersten Codierers zu der Blocklänge des zweiten Codierers möglich, die z. B. von 1:2 bis zu 1:12 variieren können oder aber auch andere Verhältnisse einnehmen können, wobei Verhältnisse kleiner Eins erfindungsgemäß hinsichtlich der Verzögerung verbessert werden können.

Dies heißt im Extremfall (für MPEG 4 CELP/ AAC 1:12), daß für denselben Zeitabschnitt des Eingangssignals, für den der AAC-Codierer einen Ausgangsdatenblock erzeugt, der Celp-Codierer zwölf Ausgangsdatenblöcke erzeugt. Der Verzögerungs-Vorteil durch den erfindungsgemäßen Datenstrom, der in Fig. 2d gezeigt ist, gegenüber dem Datenstrom, der in Fig. 2c gezeigt ist, kann in diesem Fall durchaus in Größenordnungen von einer viertel bis zu einer halben Sekunde kommen. Dieser Vorteil wird sich um so mehr erhöhen, je größer das Verhältnis zwischen Blocklänge des zweiten Codierers und Blocklänge des ersten Codierers wird, wobei im Falle des AAC-Codierers als zweiter Codierer eine möglichst große Blocklänge aufgrund des dann günstigeren Verhältnisses zwischen Nutzinformationen zu Seiteninformationen angestrebt wird, wenn es das zu codierende Signal zuläßt.

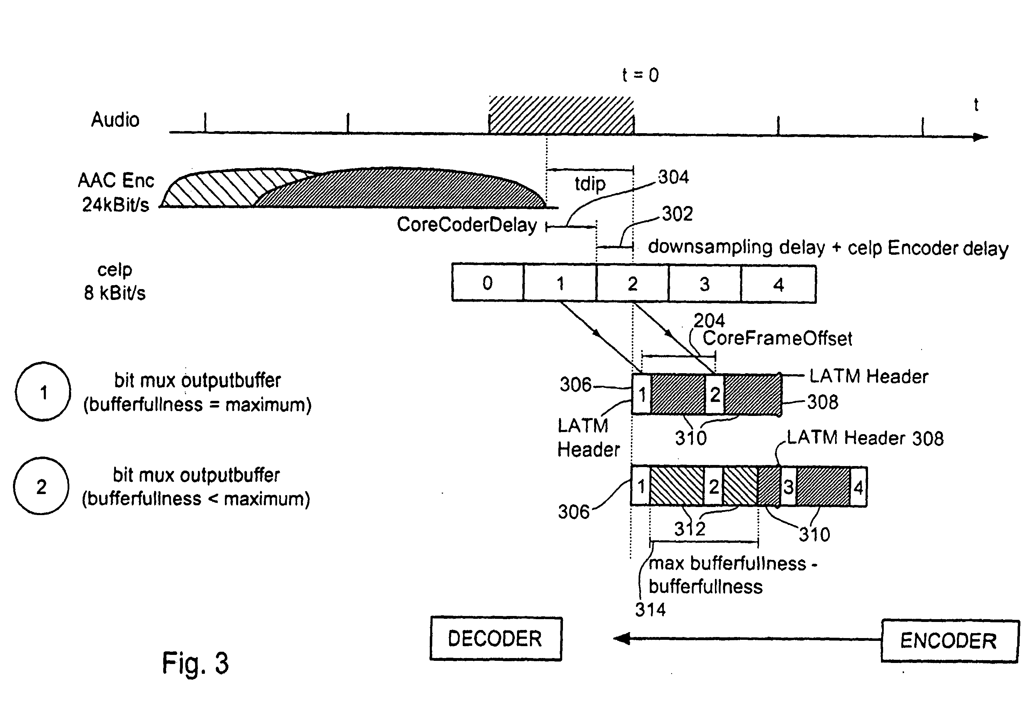

Im nachfolgenden wird auf Fig. 3 eingegangen, welche zu Fig. 2 ähnlich ist, jedoch die besondere Implementierung am Beispiel von MPEG 4 darstellt. In der ersten Zeile ist wieder ein aktueller Zeitabschnitt schraffiert gezeigt. In der zweiten Zeile ist die Fensterung, die beim AAC-Codierer verwendet wird, schematisch dargestellt. Wie es bekannt ist, wird ein Overlap-And-Add von 50 % verwendet, so daß ein Fenster üblicherweise die doppelte Länge von zeitlichen Abtastwerten hat wie der aktuelle Zeitabschnitt, der in der obersten Zeile von Fig. 3 schraffiert dargestellt ist. In Fig. 3 ist ferner die Verzögerung tdip eingezeichnet, die dem Block 26 von Fig. 1 entspricht und die im gewählten Beispiel eine Größe von 5/8 der Blocklänge hat. Typischerweise wird eine Blocklänge des aktuellen Zeitabschnitts von 960 Abtastwerten verwendet, so daß die Verzögerung tdip von 5/8 der Blocklänge 600 Abtastwerte beträgt. Beispielsweise liefert der AAC-Codierer einen Bitstrom von 24 kBit/s, während der darunter schematisch dargestellte Celp-Codierer einen Bitstrom mit einer Rate von 8 kBit/s liefert, was in einer Gesamtbitrate von 32 kBit/s resultiert.

Wie es aus Fig. 3 ersichtlich ist, entsprechen die Ausgangsdatenblöcke Null und Eins des Celp-Codierers dem aktuellen Zeitabschnitt des ersten Codierers. Der Ausgangsdatenblock mit der Nummer 2 des Celp-Codierers entspricht bereits dem nächsten Zeitabschnitt für den ersten Codierer. Dasselbe trifft für den Celp-Block mit der Nummer 3 zu. In Fig. 3 ist ferner die Verzögerung der Downsampling-Stufe 28 und des Celp-Codierers 12 durch einen Pfeil eingezeichnet, der mit dem Bezugszeichen 302 dargestellt ist. Daraus ergibt sich als die Verzögerung, die durch die Stufe 34 eingestellt werden muß, damit an der Subtrahierstelle 40 von Fig. 1 gleiche Verhältnisse vorliegen, die Verzögerung, die durch Core Coder Delay bezeichnet ist und mit einem Pfeil 304 in Fig. 3 veranschaulicht ist. Diese Verzögerung kann alternativ auch durch Block 226 erzeugt werden. So gilt beispielsweise:

$$\text{Core Coder Delay} =$$

$$= \text{tdip} - \text{Celp Encoder Delay} - \text{Downsampling Delay} =$$

$$= 600 - 120 - 117 = 363 \text{ Abtastwerte.}$$

Für den Fall ohne Bitsparkassenfunktion bzw. für den Fall, daß die Bitsparkasse (Bit Mux Outputbuffer) voll ist, was durch die Variable Bufferfullness = Max angezeigt ist, ergibt sich der in Fig. 2d gezeichnete Fall. Im Unterschied zu Fig. 2d, bei der vier Ausgangsdatenblöcke des ersten Codierers entsprechend einem Ausgangsdatenblock des zweiten Codierers erzeugt werden, wird bei Fig. 3 für einen Ausgangsdatenblock des zweiten Codierers, welcher in den beiden letzten Zeilen von Fig. 3 schwarz gezeichnet ist, zwei Ausgangsdatenblöcke des Celp-Codierers, die mit "0" und "1" bezeichnet sind, erzeugt. Erfindungsgemäß wird nun jedoch hinter einen ersten LATM-Header 306 nicht mehr der Ausgangsdatenblock des Celp-Codierers mit der Nummer "0" geschrieben, sondern der Ausgangsdatenblock des Celp-Codierers mit der Nummer "Eins", zumal der Ausgangsdatenblock mit der Nummer "Null" bereits zum Decodierer übertragen worden ist. In dem für die Celp-Datenblöcke vorgesehenen äquidistanten Rasterabstand folgt dann dem Celp-Block 1 der Celp-Block 2 für den nächsten Zeitabschnitt, wobei dann zur Fertigstellung eines Frames der Rest der Daten des Ausgangsdatenblocks des AAC-Codierers in den Datenstrom geschrieben wird, bis wieder ein nächster LATM-Header 308 für den nächsten Zeitabschnitt folgt.

Die vorliegende Erfindung kann, wie es in der letzten Zeile von Fig. 3 dargestellt ist, einfach mit der Bitsparkassenfunktion kombiniert werden. Für den Fall, daß die Variable "Bufferfullness", die die Füllung der Bitsparkasse anzeigt, kleiner als der maximale Wert ist, bedeutet dies, daß der AAC-Frame für den unmittelbar vorhergehenden Zeitabschnitt mehr Bits als eigentlich zulässig benötigt hat. Dies bedeutet, daß hinter dem LATM-Header 306 die Celp-Frames wie vorher geschrieben werden, daß jedoch zunächst der Ausgangsdatenblock oder die Ausgangsdatenblöcke des AAC-Codierers aus unmittelbar vorhergehenden Zeitabschnitten in den Bitstrom geschrieben werden müssen, bevor mit dem Schreiben des Ausgangsdatenblocks des AAC-Codierers für den aktuellen Zeitabschnitt begonnen werden kann. Aus dem Vergleich der beiden letzten Zeilen von Fig. 3, die mit "1" und "2" gekennzeichnet sind, ist zu sehen, daß die Bitsparkassenfunktion unmittelbar auch zu einer Verzögerung im Codierer für den AAC-Frame führt. So sind die Daten für den AAC-Frame des aktuellen Zeitabschnitts, die in Fig. 3 mit 310 bezeichnet sind, zwar genau zum gleichen Zeitpunkt wie im Fall "1" vorhanden, können jedoch erst dann in den Bitstrom geschrieben werden, nachdem die AAC-Daten 312 für den unmittelbar vorhergehenden Zeitabschnitt in den Bitstrom geschrieben worden sind. In Abhängigkeit von dem Bitsparkassenstand des AAC-Codierers verschiebt sich somit die Anfangsposition des AAC-Frames.

Der Bitsparkassenstand wird gemäß MPEG 4 im Element StreamMuxConfig durch die Variable "Bufferfullness" übertragen. Die Variable Bufferfullness berechnet sich aus der Variablen Bitreservoir geteilt durch das 32fache der gerade vorhandenen Kanalanzahl der Audiokanäle.

Es sei darauf hingewiesen, daß es sich bei dem Zeiger, der in Fig. 3 mit dem Bezugszeichen 314 gekennzeichnet ist, und dessen Länge = max Bufferfullness - Bufferfullness ist, um einen Vorwärtszeiger handelt, der gewissermaßen in die Zukunft zeigt, während es sich bei dem in Fig. 5 gezeichneten Zeiger um einen Rückwärtszeiger handelt, der gewissermaßen in die Vergangenheit zeigt. Dies liegt daran, daß gemäß vorliegendem Ausführungsbeispiel der LATM-Header immer dann in den Bitstrom geschrieben wird, nachdem der aktuelle Zeitabschnitt durch den AAC-Codierer verarbeitet worden ist, obgleich ggf. noch AAC-Daten aus vorherigen Zeitabschnitten in den Bitstrom zu schreiben sind.

Es sei ferner darauf hingewiesen, daß der Zeiger 314 absichtlich unterhalb des Celp-Blocks 2 unterbrochen gezeichnet ist, da er die Länge des Celp-Blocks 2 genauso wie die Länge des Celp-Blocks 1 nicht berücksichtigt, da diese Daten selbstverständlich nichts mit der Bitsparkasse des AAC-Codierers zu tun haben. Ferner werden keinerlei Header-Daten und Bits von gegebenenfalls vorhandenen weiteren Layern berücksichtigt.

Im Decodierer wird zunächst aus dem Bitstrom eine Extraktion der Celp-Frames vorgenommen, was ohne weiteres möglich ist, da dieselben beispielsweise äquidistant angeordnet sind und eine feste Länge haben.

Im LATM-Header können jedoch ohnehin Länge und Abstand aller CELP-Blöcke signalisiert werden, so daß in jedem Fall eine unmittelbare Decodierung möglich ist.

Damit werden die gewissermaßen durch den Celp-Block 2 getrennten Teile der Ausgangsdaten des AAC-Codierers des unmittelbar vorhergehenden Zeitabschnitts wieder aneinandergefügt, und der LATM-Header 306 rückt gewissermaßen an den Beginn des Zeigers 314, so daß der Decodierer unter Kenntnis der Länge des Zeigers 314 weiß, wann nunmehr die Daten des unmittelbar vorhergehenden Zeitabschnitts zu Ende sind, um dann, wenn diese Daten vollständig eingelesen sind, den unmittelbar vorhergehenden Zeitabschnitt zusammen mit den für denselben vorhandenen Celp-Datenblöcken mit voller Audioqualität decodieren zu können.

Im Gegensatz zu dem in Fig. 2c gezeigten Fall, bei dem einem LATM-Header sowohl die Ausgangsdatenblöcke des ersten Codierers als auch der Ausgangsdatenblock des zweiten Codierers folgt, kann nun einerseits durch die Variable Core Frame Offset eine Verschiebung von Ausgangsdatenblöcken des ersten Codierers nach vorne im Bitstrom erfolgen, während durch den Pfeil 314 (max Bufferfullness - Bufferfullness) eine Verschiebung des Ausgangsdatenblocks des zweiten Codierers nach hinten im skalierbaren Datenstrom erreicht werden kann, so daß die Bitsparkassenfunktion auch im skalierbaren Datenstrom auf einfache und sichere Art und weise implementiert werden kann, während das Grundraster des Bitstroms durch die aufeinanderfolgende LATM-Bestimmungsdatenblöcke beibehalten wird, die immer dann geschrieben werden, wenn der AAC-Codierer einen Zeitabschnitt codiert hat, und die daher als Bezugspunkt dienen können, auch wenn, wie es in Fig. 3 in der letzten Zeile gezeigt ist, ein Großteil der Daten in dem durch einen LATM-Header bezeichneten Frame einerseits vom nächsten Zeitabschnitt stammen (hinsichtlich der Celp-Frames) oder aber von vorhergehenden Zeitabschnitten stammen (hinsichtlich des AAC-Frames), wobei die jeweiligen Verschiebungen jedoch durch die zwei im Bitstrom zusätzlich zu übertragenden Variablen einem Decodierer mitgeteilt werden.

**Patentansprüche**

1. Verfahren zum Erzeugen eines skalierbaren Datenstroms aus zumindest zwei Blöcken von Ausgangsdaten eines ersten Codierers (12) und zumindest einem Block von Ausgangsdaten eines zweiten Codierers (14), wobei die zumindest zwei Blöcke von Ausgangsdaten des ersten Codierers (12) zusammen eine Anzahl von Abtastwerten des Eingangssignals für den ersten Codierer darstellen, die einen aktuellen Abschnitt des Eingangssignals für den ersten Codierer bilden, und wobei der zumindest eine Block von Ausgangsdaten des zweiten Codierers (14) eine Anzahl von Abtastwerten des Eingangssignals für den zweiten Codierer darstellt, wobei die Anzahl von Abtastwerten für den zweiten Codierer einen aktuellen Abschnitt des Eingangssignals für den zweiten Codierer bildet, wobei die Anzahl von Abtastwerten für den ersten Codierer und die Anzahl von Abtastwerten für den zweiten Codierer gleich sind, und wobei die aktuellen Abschnitte für den ersten und den zweiten Codierer identisch sind oder um eine Zeitdauer (34) zueinander verschoben sind, mit folgenden Schritten:

   Schreiben eines Bestimmungsdatenblocks (306) für den aktuellen Abschnitt des Eingangssignals für den ersten oder den zweiten Codierer;

   Schreiben eines Blocks von Ausgangsdaten (310) des zweiten Codierers (14) in Übertragungsrichtung (202) von einer Codiervorrichtung zu einer Decodiervorrichtung hinter dem Bestimmungsdatenblock (306);

   Schreiben zumindest eines Blocks (0) von Ausgangsdaten des ersten Codierers (12) in der Übertragungsrichtung (202) vor dem Bestimmungsdatenblock (306); und

   Schreiben von Offset-Informationen (204) in den skalierbaren Datenstrom, die anzeigen, daß der zumindest eine Block von Ausgangsdaten (0) des ersten Codierers in der Übertragungsrichtung vor dem Bestimmungsdatenblock (306) steht.

2. Verfahren nach Anspruch 1, bei dem die Blöcke von Ausgangsdaten des ersten Codierers so in den skalierbaren Datenstrom geschrieben werden, daß sie in äquidistanten Abständen angeordnet sind, oder bei dem die Blöcke von Ausgangsdaten des ersten Codierers (12) gleich lang sind.

3. Verfahren nach Anspruch 1 oder 2,
   bei dem der Block von Ausgangsdaten des zweiten Codierers (14) für gleich lange Abschnitte des Eingangssignals unterschiedliche Längen hat,
   bei dem ein Block (1) von Ausgangsdaten des ersten Codierers für den aktuellen Abschnitt des Eingangssignals für den ersten Codierer unmittelbar hinter dem Bestimmungsdatenblock (306) geschrieben wird,
   bei dem hinter dem Block (1) von Ausgangsdaten des ersten Codierers zumindest ein Teil eines Blocks von Ausgangsdaten (312) des zweiten Codierers für einen vorausgehenden Abschnitt des Eingangssignals angeordnet ist, und
   bei dem Pufferinformationen in den Bitstrom geschrieben werden, die anzeigen, wie weit sich die Ausgangsdaten des zweiten Codierers (14) für den vorausgehenden Abschnitt des Eingangssignals für den zweiten Codierer hinter dem Bestimmungsdatenblock (306) erstrecken.

4. Verfahren nach Anspruch 3,
   bei dem der zweite Codierer (14) eine Bitsparkassenfunktion aufweist, wobei die Größe der Bitsparkasse durch Maximal-Puffergrößeninformationen gegeben ist, und bei dem der aktuelle Stand der Bitsparkassenfunktion durch Aktuell-Pufferinformationen gegeben ist,
   bei dem die Pufferinformationen den Aktuell-Pufferinformationen entsprechen, so daß ein Decodierer durch Subtrahieren der Aktuell-Pufferinformationen von den Maximal-Pufferinformationen und unter ausschließliche Berücksichtigung von Ausgangsdaten des zweiten Codierers bestimmen kann, wo im skalierbaren Datenstrom hinter dem Bestimmungsdatenblock im aktuellen Abschnitt der Block von Ausgangsdaten des zweiten Codierers für den aktuellen Abschnitt beginnt.

5. Verfahren nach einem der vorhergehenden Ansprüche,
   bei dem der Schritt des Schreibens des zumindest einen Blocks von Ausgangsdaten des ersten Codierers für den aktuellen Abschnitt unmittelbar dann ausgeführt wird, wenn der zumindest eine Block von dem ersten Codierer (12) ausgegeben wird, bei dem der Schritt des Schreibens des Bestimmungsdatenblocks (306) für den aktuellen Abschnitt erst dann durchgeführt wird, wenn der Block von Ausgangsdaten des zweiten Codierers für den aktuellen Abschnitt von dem zweiten Codierer ausgegeben wird, und bei dem der Schritt des Schreibens der Ausgangsdaten des zweiten Codierers erst dann durchgeführt wird, wenn ggf. vorhandene Ausgangsdaten (312) des zweiten Codierers für einen vorausgehenden Abschnitt des Eingangssignals in den skalierbaren Datenstrom geschrieben sind, wenn der Bestimmungsdatenblock (306) für den aktuellen Abschnitt geschrieben ist, und wenn gerade kein Block von Ausgangsdaten des ersten Codierers (12) zum Schreiben vorhanden ist.

6. Verfahren nach einem der vorhergehenden Ansprüche, bei dem mehr als ein Block von Ausgangsdaten des ersten Codierers (12) für den aktuellen Abschnitt der Eingangsdaten vor dem Bestimmungsdatenblock (306) geschrieben werden, und bei dem die Offset-Informationen (204) anzeigen, wie viele Blöcke von Ausgangsdaten des ersten Codierers für den des aktuellen Abschnitts des Eingangssignals vor dem Bestimmungsdatenblock für den aktuellen Abschnitt des Eingangssignals angeordnet sind.

7. Verfahren nach einem der vorhergehenden Ansprüche, bei dem der zumindest eine Block von Ausgangsdaten des zweiten Codierers (14) und die zumindest zwei Blöcke von Ausgangsdaten des ersten Codierers (12) die Nutzdaten in einem Superframe sind, wobei das Verhältnis der Anzahl von Blöcken von Ausgangsdaten des zweiten Codierers zu der Anzahl von Blöcken von Ausgangsdaten des ersten Codierers kleiner Eins ist und insbesondere eines der folgenden Verhältnisse ist: 2/3, 1/2, 1/3, 1/4, 1/6, 1/12, 3/4.

8. Verfahren zum Decodieren eines skalierbaren Datenstroms aus zumindest zwei Blöcken von Ausgangsdaten eines ersten Codierers (12) und zumindest einem Block von Ausgangsdaten eines zweiten Codierers (14), wobei die zumindest zwei Blöcke von Ausgangsdaten des ersten Codierers (12) zusammen eine Anzahl von Abtastwerten des Eingangssignals für den ersten Codierer darstellen, die einen aktuellen Abschnitt des Eingangssignals für den ersten Codierer bilden, und wobei der zumindest eine Block von Ausgangsdaten des zweiten Codierers (14) eine Anzahl von Abtastwerten des Eingangssignals für den zweiten Codierer darstellt, wobei die Anzahl von Abtastwerten für den zweiten Codierer einen aktuellen Abschnitt des Eingangssignals für den zweiten Codierer bildet, wobei die Anzahl von Abtastwerten für den ersten Codierer und die Anzahl von Abtastwerten für den zweiten Codierer gleich sind, und wobei die aktuellen Abschnitte für den ersten und den zweiten Codierer identisch sind oder um eine Zeitdauer (34) zueinander verschoben sind, wobei der skalierbare Datenstrom ferner einen Bestimmungsdatenblock (306) für den aktuellen Abschnitt des ersten Codierers oder des zweiten Codierers, einen Block von Ausgangsdaten (310) des zweiten Codierers nach dem Bestimmungsdatenblock, zumindest einen Block von Ausgangsdaten des ersten Codierers vor dem Bestimmungsdatenblock und Offset-Informationen aufweist, die anzeigen, daß der zumindest eine Block von Ausgangsdaten des ersten Codierers in der Übertragungsrichtung von einer Codiervorrichtung zu einer Decodiervorrichtung vor dem Bestimmungsdatenblock steht, mit folgenden Schritten:

Lesen des zumindest einen Blocks (0) von Ausgangsdaten des ersten Codierers (12);

Lesen der Ausgangsdaten (310) des zweiten Codierers;

Lesen der Offset-Informationen (204);

Bestimmen, daß der zumindest eine Block (0) von Ausgangsdaten des ersten Codierers (12) zu den Ausgangsdaten (310) des zweiten Codierers gehört, obwohl der zumindest eine Block vor dem Bestimmungsdatenblock (306) im Datenstrom steht; und

Decodieren der Ausgangsdaten des zweiten Codierers (14) und der Ausgangsdaten des ersten Codierers (12), um ein decodiertes Signal zu erhalten.

9. Vorrichtung zum Erzeugen eines skalierbaren Datenstroms aus zumindest zwei Blöcken von Ausgangsdaten eines ersten Codierers (12) und zumindest einem Block von Ausgangsdaten eines zweiten Codierers (14), wobei die zumindest zwei Blöcke von Ausgangsdaten des ersten Codierers (12) zusammen eine Anzahl von Abtastwerten des Eingangssignals für den ersten Codierer darstellen, die einen aktuellen Abschnitt des Eingangssignals für den ersten Codierer bilden, und wobei der zumindest eine Block von Ausgangsdaten des zweiten Codierers (14) eine Anzahl von Abtastwerten des Eingangssignals für den zweiten Codierer darstellt, wobei die Anzahl von Abtastwerten für den zweiten Codierer einen aktuellen Abschnitt des Eingangssignals für den zweiten Codierer bildet, wobei die Anzahl von Abtastwerten für den ersten Codierer und die Anzahl von Abtastwerten für den ersten Codierer und die Anzahl von Abtastwerten für den zweiten Codierer gleich sind, und wobei die aktuellen Abschnitte für den ersten und den zweiten Codierer identisch sind oder um eine Zeitdauer (34) zueinander verschoben sind, mit folgenden Merkmalen:

einer Datenstromschreibeinrichtung (20), die ausgebildet ist, um folgende Schritte durchführen zu können:

Schreiben eines Bestimmungsdatenblocks (306) für den aktuellen Abschnitt des Eingangssignals für den ersten oder den zweiten Codierer;

Schreiben eines Blocks von Ausgangsdaten (310) des zweiten Codierers (14) in Übertragungsrichtung (202) von einer Codiervorrichtung zu einer Decodiervorrichtung hinter dem Bestimmungsdatenblock (306);

Schreiben zumindest eines Blocks (0) von Ausgangsdaten des ersten Codierers (12) in der Übertragungsrichtung (202) vor dem Bestimmungsdatenblock (306); und

Schreiben von Offset-Informationen (204) in den skalierbaren Datenstrom, die anzeigen, daß der zumindest eine Block von Ausgangsdaten (0) des ersten Codierers in der Übertragungsrichtung vor dem Bestimmungsdatenblock (306) steht.

10. Vorrichtung zum Decodieren eines skalierbaren Datenstroms aus zumindest zwei Blöcken von Ausgangsdaten eines ersten Codierers (12) und zumindest einem Block von Ausgangsdaten eines zweiten Codierers (14), wobei die zumindest zwei Blöcke von Ausgangsdaten des ersten Codierers (12) zusammen eine Anzahl von Abtastwerten des Eingangssignals für den ersten Codierer darstellen, die einen aktuellen Abschnitt des Eingangssignals für den ersten Codierer bilden, und wobei der zumindest eine Block von Ausgangsdaten des zweiten Codierers (14) eine Anzahl von Abtastwerten des Eingangssignals für den zweiten Codierer darstellt, wobei die Anzahl von Abtastwerten für den zweiten Codierer einen aktuellen Abschnitt des Eingangssignals für den zweiten Codierer bildet, wobei die Anzahl von Abtastwerten für den ersten Codierer und die Anzahl von Abtastwerten für den zweiten Codierer gleich sind, und wobei die aktuellen Abschnitte für den ersten und den zweiten Codierer identisch sind oder um eine Zeitdauer (34) zueinander verschoben sind, wobei der skalierbare Datenstrom ferner einen Bestimmungsdatenblock (306) für den aktuellen Abschnitt des ersten Codierers oder des zweiten Codierers, einen Block von Ausgangsdaten (310) des zweiten Codierers nach dem Bestimmungsdatenblock, zumindest einen Block von Ausgangsdaten des ersten Codierers vor dem Bestimmungsdatenblock und Offset-Informationen aufweist, die anzeigen, daß der zumindest eine Block von Ausgangsdaten des ersten Codierers in der Übertragungsrichtung von einer Codiervorrichtung zu einer Decodiervorrichtung vor dem Bestimmungsdatenblock steht, mit folgenden Merkmalen:

einer Datenstromdemultiplexeinrichtung, die ausgebildet ist, um folgende Schritte durchführen zu können:

Lesen des zumindest einen Blocks (0) von Ausgangsdaten des ersten Codierers (12);

Lesen der Ausgangsdaten (310) des zweiten Codierers;

Lesen der Offset-Informationen (204);

Bestimmen, daß der zumindest eine Block (0) von Ausgangsdaten des ersten Codierers (12) zu den Ausgangsdaten (310) des zweiten Codierers gehört, obwohl der zumindest eine Block vor dem Bestimmungsdatenblock (306) im Datenstrom steht; und

einer Einrichtung zum Decodieren der Ausgangsdaten des zweiten Codierers (14) und der Ausgangsdaten des ersten Codierers (12), um ein decodiertes Signal zu erhalten.

## Claims

1. A method of producing a scalable data stream of at least two blocks of output data of a first coder (12) and at least one block of output data of a second coder (14), wherein the at least two blocks of output data of the first coder (12) together represent a number of sample values of the input signal for the first coder which form a current section of the input signal for the first coder, and wherein the at least one block of output data of the second coder (14) represents a number of sample values of the input signal for the second coder, wherein the number of sample values for the second coder forms a current section of the input signal for the second coder, wherein the number of sample values for the first coder and the number of sample values for the second coder is the same, and wherein the current sections for the first and the second coder are identical or shifted compared to each other by a duration (34), the method comprising the following steps:

writing a determination data block (306) for the current section of the input signal for the first or the second coder;

writing a block of output data (310) of the second coder (14), in the direction of transfer (202) from a coding device to a decoding device, after the determination data block (306);

writing at least one block (0) of output data of the first coder (12), in the direction of transfer (202), in front of the determination data block (306); and

writing offset information (204) into the scalable data stream, indicating that the at least one block of output data (0) of the first coder, in the direction of transfer, is in front of the determination data block (306).

2. The method according to claim 1, wherein the blocks of output data of the first coder are written into the scalable data stream in such a way that they are arranged in equidistant intervals, or wherein the blocks of output data of the first coder (12) have the same length.

3. The method according to claims 1 or 2, wherein the block of output data of the second coder (14) for equally long sections of the input signal has different lengths, wherein a block (1) of output data of the first coder for the current section of the input signal for the first coder is written directly after the determination data block (306), wherein at least a part of a block of output data (312) of the second coder for a previous section of the input signal is arranged after block (1) of output data of the first coder, and wherein buffer information is written into the bit stream, indicating how long the output data of the second coder (14) for the previous section of the input signal for the second coder extends after the determination data block (306).

4. The method according to claim 3, wherein the second coder (14) comprises a bit savings bank function, wherein the size of the bit savings bank is given by the maximum buffer size information, and wherein the current situation of the bit savings bank function is given by current buffer information, and wherein the buffer information corresponds to the current buffer information so that a decoder can determine by subtracting the current buffer information from the maximum buffer information and by exclusively considering output data of the second coder where in the scalable data stream after the determination data block in the current section the block of output data of the second coder for the current section begins.

5. The method according to one of the preceding claims,
wherein the step of writing the at least one block of output data of the first coder for the current section is directly performed when the at least one block is output by the first coder (12),
wherein the step of writing the determination data block (306) for the current section is only performed when the block of output data of the second coder for the current section is output by the second coder, and
wherein the step of writing the output data of the second coder is only performed when, if necessary, existing output data (312) of the second coder for a previous section of the input signal is written into the scalable data stream when the determination data block (306) for the current section is written and when there is presently no block of output data of the first coder (12) for writing.

6. The method according to one of the preceding claims,
wherein more than one block of output data of the first coder (12) for the current section of the input data is written in front of the determination data block (306), and
wherein the offset information (204) indicates how many blocks of output data of the first coder for the current section of the input signal are arranged in front of the determination data block for the current section of the input signal.

7. The method according to one of the preceding claims, wherein the at least one block of output data of the second coder (14) and the at least two blocks of output data of the first coder (12) are the payload data in a superframe, wherein the ratio of the number of blocks of output data of the second coder and the number of blocks of output data of the first coder is smaller than one and, in particular, is one of the following ratios: 2/3, 1/2, 1/3, 1/4, 1/6, 1/12, 3/4.

8. A method of decoding a scalable data stream of at least two blocks of output data of a first coder (12) and at least one block of output data of a second coder (14), wherein the at least two blocks of output data of the first coder (12) together represent a number of sample values of the input signal for the first coder forming a current section of the input signal for the first coder, wherein the at least one block of output data of the second coder (14) represents a number of sample values of the input signal for the second coder, wherein the number of sample values for the second coder forms a current section of the input signal for the second coder, wherein the number of sample values for the first coder and the number of sample values for the second coder is equal, and wherein the current sections for the first and second coders are identical or shifted regarding each other by a duration (34), wherein the scalable data stream further comprises a determination data block (306) for the current section of the first coder or the second coder, a block of output data (310) of the second coder after the determination data block, at least one block of output data of the first coder in front of the determination data block and offset information indicating that the at least one block of output data of the first coder, in the direction of transfer from a coding device to a decoding device, is in front of the determination data block, the method comprising the following steps:

   reading the at least one block (0) of output data of the first coder (12);

   reading the output data (310) of the second coder;

   reading the offset information (204);

   determining that the at least one block (0) of output data of the first coder (12) belongs to the output data (310) of the second coder although the at least one block is in front of the determination data block (306) in the data stream; and

   decoding the output data of the second coder (14) and the output data of the first coder (12) to obtain a decoded signal.

9. A device for producing a scalable data stream of at least two blocks of output data of a first coder (12) and at least one block of output data of a second coder (14), wherein the at least two blocks of output data of the first coder (12) together represent a number of sample values of the input signal for the first coder forming a current section of the input signal for the first coder, wherein the at least one block of output data of the second coder (14) represents a number of sample values of the input signal for the second coder, wherein the number of sample values for the second coder forms a current section of the input signal for the second coder, wherein the number of sample values for the first coder and the number of sample values for the second coder is equal, and wherein the current sections for the first and second coders are identical or shifted regarding each other by a duration (34), the device comprising:

   data stream writing means (20) formed to be able to perform the following steps:

      writing a determination data block (306) for the current section of the input signal for the first or the second coder;

      writing a block of output data (310) of the second coder (14), in the direction of transfer (202) from a coding device to a decoding device, after the determination data block (306);

      writing at least one block (0) of output data of the first coder (12), in the direction of transfer (202), in front of the determination data block (306); and

      writing offset information (204) in the scalable data stream indicating that the at least one block of output data (0) of the first coder, in the direction of transfer, is in front of the determination data block (306).

10. A device for decoding a scalable data stream of at least two blocks of output data of a first coder 12 and at least one block of output data of a second coder (14), wherein the at least two blocks of output data of the first coder (12) together represent a number of sample values of the input signal for the first coder forming a current section of the input signal for the first coder, wherein the at feast one block of output data of the second coder (14) represents a number of sample values of the input signal for the second coder, wherein the number of sample values for the second coder forms a current section of the input signal for the second coder, wherein the number of sample values for the first coder and the number of sample values for the second coder is equal, wherein the current sections for the first and second coders are identical or shifted, regarding each other, by a duration (34), wherein the scalable data stream further comprises a determination data block (306) for the current section of the first coder or the second coder, a block of output data (310) of the second coder after the determination data block, at least one block of output data of the first coder in front of the determination data block and offset information indicating that the at least one block of output data of the first coder, in the direction of transfer from a coding device to a decoding device, is in front of the determination data block, the device comprising:

   data stream demultiplexing means formed in order to be able to perform the following steps:

      reading the at least one block (0) of output data of the first coder (12);

reading the output data (310) of the second coder;

reading the offset information (204);

determining that the at least one block (0) of output data of the first coder (12) belongs to the output data (310) of the second coder although the at least one block is in front of the determination data block (306) in the data stream; and

means for decoding the output data of the second coder (14) and the output data of the first coder (12) to obtain a decoded signal.

**Revendications**

1. Procédé pour produire un flux de données modulable à partir d'au moins deux blocs de données de sortie d'un premier codeur (12) et d'au moins un bloc de données de sortie d'un deuxième codeur (14), les au moins deux blocs de données de sortie du premier codeur (12) représentant ensemble un nombre de valeurs de balayage du signal d'entrée du premier codeur formant un segment actuel du signal d'entrée du premier codeur et l'au moins un bloc de données de sortie du deuxième codeur (14) représentant un nombre de valeurs de balayage du signal d'entrée du deuxième codeur, le nombre de valeurs de balayage du deuxième codeur formant un segment actuel du signal d'entrée du deuxième codeur, le nombre de valeurs de balayage du premier codeur et le nombre de valeurs de balayage du deuxième codeur étant identiques, et les segments actuels des premier et deuxième codeurs étant identiques ou décalés d'un laps de temps (34) l'un par rapport à l'autre, aux étapes suivantes consistant à :

écrire un bloc de données de détermination (306) pour le segment actuel du signal d'entrée du premier ou du deuxième codeur ;
écrire un bloc de données de sortie (310) du deuxième codeur (14), dans la direction de transmission (202) d'un dispositif de codage vers un dispositif de décodage, après le bloc de données de détermination (306) ;
écrire au moins un bloc (0) de données de sortie du premier codeur (12), dans la direction de transmission (202), avant le bloc de données de détermination (306) ; et
écrire des informations de décalage (204) dans le flux de données modulable indiquant que l'au moins un bloc des données de sortie (0) du premier codeur se situe, dans la direction de transmission, avant le bloc de détermination (306).

2. Procédé selon la revendication 1, dans lequel les blocs de données de sortie du premier codeur sont écrits dans le flux de données modulable de telle sorte qu'ils soient disposés à des distances équidistantes, ou dans lequel les blocs de données de sortie du premier codeur (12) sont de longueur identique.

3. Procédé selon la revendication 1 ou 2,
dans lequel le bloc de données de sortie du deuxième codeur (14) présentent, pour des segments de longueur identique du signal d'entrée, des longueurs différentes,
dans lequel un bloc (1) de données de sortie du premier codeur pour le segment actuel du signal d'entrée du premier codeur est écrit immédiatement après le bloc réglementaire de détermination (306),
dans lequel est disposée, après le bloc (1) de données de sortie du premier codeur, au moins une partie d'un bloc de données de sortie (312) du deuxième codeur pour un segment précédent du signal d'entrée, et
dans lequel sont écrites dans le flux de données des informations-tampons indiquant la distance à laquelle les données de sortie du deuxième codeur (14) pour le segment précédent du signal d'entrée du deuxième codeur se situent après le bloc de données de détermination (306).

4. Procédé selon la revendication 3,
dans lequel le deuxième codeur (14) présente une fonction de caisse d'épargne de bits, la grandeur de la caisse d'épargne étant déterminée par les informations de grandeur de tampon maximale, et dans lequel l'état actuel de la fonction de caisse d'épargne de bits est déterminé par les informations-tampons actuelles,
dans lequel les informations-tampons correspondent aux informations-tampons actuelles, de sorte qu'un décodeur peut déterminer, en soustrayant les informations-tampons actuelles des informations-tampons maximales et en tenant compte exclusivement des données de sortie du deuxième codeur, l'endroit dans le flux de données modulable après le bloc de données de détermination dans le segment actuel auquel commence le bloc de données de sortie du deuxième codeur pour le segment actuel.

5. Procédé selon l'une des revendications précédentes,
dans lequel l'étape d'écriture de l'au moins un bloc de données de sortie du premier codeur pour le segment actuel est réalisée immédiatement lorsque l'au moins un bloc est sorti par le premier codeur (12),
dans lequel l'étape d'écriture du bloc de données de détermination (306) pour le segment actuel n'est réalisée que lorsque le bloc de données de sortie du deuxième codeur pour le segment actuel est sortie par le deuxième codeur, et

dans lequel l'étape d'écriture des données de sortie du deuxième codeur n'est réalisée que lorsque des données de sortie (312), éventuellement présentes, du deuxième codeur pour un segment précédent du signal d'entrée sont écrites dans le flux de données modulable lorsqu'est écrit le bloc de données de détermination (306) pour le segment actuel et lorsque, précisément, n'est présent aucun bloc de données de sortie du premier codeur (12) pour écriture.

6. Procédé selon l'une des revendications précédentes,

dans lequel plus d'un bloc de données de sortie du premier codeur (12) pour le segment actuel des données d'entrée sont écrits avant le bloc de données de détermination (306), et

dans lequel les informations de décalage (204) indiquent le nombre de blocs de données de sortie du premier codeur pour le segment actuel du signal d'entrée qui sont disposés avant le bloc de données de détermination pour le segment actuel du signal d'entrée.

7. Procédé selon l'une des revendications précédentes, dans lequel l'au moins un bloc de données de sortie du deuxième codeur (14) et les au moins deux blocs de données de sortie du premier codeur (12) sont les données utiles dans une supertrame, le rapport entre le nombre de blocs de données de sortie du deuxième codeur et le nombre de blocs de données de sortie du premier codeur est inférieur à un et est en particulier l'un des rapports suivants : 2/3, 1/2, 1/3, 1/4, 1/6, 1/12, 3/4.

8. Procédé pour décoder un flux de données modulable à partir d'au moins deux blocs de données de sortie d'un premier codeur (12) et d'au moins un bloc de données de sortie d'un deuxième codeur (14), les au moins deux blocs de données de sortie du premier codeur (12) représentant ensemble un nombre de valeurs de balayage du signal d'entrée du premier codeur formant un segment actuel du signal d'entrée du premier codeur, et l'au moins un bloc de données de sortie du deuxième codeur (14) représentant un nombre de valeurs de balayage du signal d'entrée du deuxième codeur, le nombre de valeurs de balayage du deuxième codeur formant un segment actuel du signal d'entrée du deuxième codeur, le nombre de valeurs de balayage du premier codeur et le nombre de valeurs de balayage du deuxième codeur étant identiques, et

les segments actuels des premier et deuxième codeurs sont identiques ou décalés d'un laps de temps (34) l'un par rapport à l'autre, le flux de données modulable présentant, par ailleurs, un bloc de données de détermination (306) pour le segment actuel du premier codeur ou du deuxième codeur, un bloc des données de sortie (310) du deuxième codeur après le bloc de données de détermination, au moins un bloc des données de sortie du premier codeur avant le bloc de données de détermination et des informations de décalage indiquant que l'au moins un bloc de données de sortie du premier codeur se trouve, dans la direction de transmission d'un dispositif de codage vers un dispositif de décodage, avant le bloc de données de détermination, aux étapes suivantes consistant à :

lire l'au moins un bloc (0) de données de sortie du premier codeur (12) ;
lire les données de sortie (310) du deuxième codeur ;
lire les informations de décalage (204) ;
déterminer que l'au moins un bloc (0) de données de sortie du premier codeur (12) appartient aux données de sortie (310) du deuxième codeur, bien que l'au moins un bloc se trouve avant le bloc de données de détermination (306) dans le flux de données ; et
décoder les données de sortie du deuxième codeur (14) et les données de sortie du premier codeur (12), pour obtenir un signal décodé.

9. Dispositif pour produire un flux de données modulable à partir d'au moins deux blocs de données de sortie d'un premier codeur (12) et d'au moins un bloc de données de sortie d'un deuxième codeur (14), les au moins deux blocs de données de sortie du premier codeur (12) représentant ensemble un nombre de valeurs de balayage du signal d'entrée pour le premier codeur formant un segment actuel du signal d'entrée du premier codeur et l'au moins un bloc de données de sortie du deuxième codeur (14) représentant un nombre de valeurs de balayage du signal d'entrée du deuxième codeur, le nombre de valeurs de balayage du deuxième codeur formant un segment actuel du signal d'entrée du deuxième codeur, le nombre de valeurs de balayage du premier codeur et le nombre de valeurs de balayage du deuxième codeur étant identiques, et les segments actuels des premier et deuxième codeurs étant identiques ou décalés d'un laps de temps (34) l'un par rapport à l'autre, aux caractéristiques suivantes :

un premier dispositif d'écriture de flux de données (20) réalisé pour pouvoir exécuter les étapes suivantes :

écrire un bloc de données de détermination (306) pour le segment actuel du signal d'entrée du premier ou du deuxième codeur ;

écrire un bloc de données de sortie (310) du deuxième codeur (14), dans la direction de transmission (202) d'un dispositif de codage vers un dispositif de décodage, après le bloc de données de détermination (306) ;

écrire au moins un bloc (0) de données de sortie du premier codeur (12), dans la direction de transmission (202), avant le bloc de données de détermination (306) ; et

écrire des informations de décalage (204) dans le flux de données modulable indiquant que l'au moins un bloc des données de sortie (0) du premier codeur se situe, dans la direction de transmission, avant le bloc de détermination (306).

10. Dispositif pour décoder un flux de données modulable à partir d'au moins deux blocs de données de sortie d'un premier codeur (12) et d'au moins un bloc de données de sortie d'un deuxième codeur (14), les au moins deux blocs de données de sortie du premier codeur (12) représentant ensemble un nombre de valeurs de balayage du signal d'entrée du premier codeur formant un segment actuel du signal d'entrée du premier codeur, et l'au moins un bloc de données de sortie du deuxième codeur (14) représentant un nombre de valeurs de balayage du signal d'entrée du deuxième codeur, le nombre de valeurs de balayage du deuxième codeur formant un segment actuel du signal d'entrée du deuxième codeur, le nombre de valeurs de balayage du premier codeur et le nombre de valeurs de balayage du deuxième codeur étant identiques, et les segments actuels des premier et deuxième codeurs étant identiques ou décalés d'un laps de temps (34) l'un par rapport à l'autre, le flux de données modulable présentant, par ailleurs, un bloc de données de détermination (306) pour le segment actuel du premier codeur ou du deuxième codeur, un bloc des données de sortie (310) du deuxième codeur après le bloc de données de détermination, au moins un bloc des données de sortie du premier codeur avant le bloc de données de détermination et des informations de décalage indiquant que l'au moins un bloc de données de sortie du premier codeur se trouve, dans la direction de transmission d'un dispositif de codage vers un dispositif de décodage, avant le bloc de données de détermination, aux caractéristiques suivantes :

un dispositif de démultiplexage de flux de données réaliser pour pouvoir exécuter les étapes suivantes consistant à :

lire l'au moins un bloc (0) de données de sortie du premier codeur ( 12) ;

lire les données de sortie (310) du deuxième codeur ;

lire les informations de décalage (204) ;

déterminer que l'au moins un bloc (0) de données de sortie du premier codeur (12) appartient aux données de sortie (310) du deuxième codeur, bien que l'au moins un bloc se trouve avant le bloc de données de détermination (306) dans le flux de données; et

un dispositif destiné à décoder les données de sortie du deuxième codeur (14) et les données de sortie du premier codeur (12), pour obtenir un signal décodé.

EP 1 327 243 B1

FIG. 1

17

Fig. 2a

Blocklänge
Coder 1

Blocklänge
Coder 2

Fig. 2b

HEADER 1          HEADER 2    BITSTROM

DECODER                    ENCODER

Fig. 2c (Stand der Technik)

HEADER 1          HEADER 2    BITSTROM

OFFSET

202

DECODER                    ENCODER

CODER 1 - OFFSET = 2

Fig. 2d

Fig. 3

EP 1 327 243 B1

Fig. 4

Fig. 5

Fig. 6